# EUROPEAN PATENT SPECIFICATION

(11) **EP 0 560 538 B1**
(45) Date of publication and mention of the grant of the patent: **23.10.1996**
(21) Application number: 93301645.3
(22) Date of filing: 04.03.1993
(51) Int. Cl.: B60S 1/36, B60S 1/34, B60S 1/44

(54) **Wiper apparatus for a vehicle and method of wiping a windshield of a vehicle**
Wischanlage eines Fahrzeuges und Verfahren zum Wischen einer Windschutzscheibe eines Fahrzeuges
Dispositif d'essuyage pour un véhicule et procédé pour essuyer un pare-brise d'un véhicule

(30) Priority: 10.03.1992 JP 86376/92
(43) Date of publication of application: 15.09.1993
(73) Proprietor: MITSUBA ELECTRIC MANUFACTURING CO., LTD., Kiryu-shi, Gunma (JP)
(72) Inventor: Shirato, Masayoshi, Kiryu-shi, Gunma-ken (JP)
(74) Representative: Smith, Norman Ian

(56) References cited:
- EP-A- 0 223 390
- EP-A- 0 251 503
- DE-A- 2 640 919
- GB-A- 1 348 890
- US-A- 4 418 440

## Description

### BACKGROUND OF THE INVENTION

### Field of the Invention

The present invention relates to a wiper apparatus and a method of wiping a windshield of a vehicle. The wiper can be mounted, for example, on such vehicles as a passenger car, bus or truck.

### Description of the Related Art

Such vehicles are usually provided with wiper apparatus for wiping their windshield surfaces. A conventional wiper apparatus is constructed so that its wiper arm is oscillated in a reciprocating manner.

EP-A-0233390 relates to a windshield wiper apparatus comprising a motor for imparting a reciprocating motion to a wiper blade. This particular application seeks to increase the surface area of the windshield which is wiped by the wiper blade. This is achieved by use of an actuating motor which moves the wiper blade longitudinally during the rotation thereof.

The movement of the wiper arm is reversed at each extremity of its travel. This has been a problem since the impact and the noise of reversing at the time of such reversing cannot be eliminated.

German patent application DE-A-2640919 seeks to overcome the problem of reversing the direction of rotation of the wiper blade by the use of a motor for unidirectionally rotating the wiper blade. The wiper apparatus according to one aspect of that application comprises means such that on completion of each wipe of the windshield the wiper blade is swept across the bonnet of the vehicle to take up a position for a subsequent wipe of the windshield. In accordance with a further aspect of that application, on completion of each wipe of the windshield the wiper blade is rotated above the roof of the vehicle to take up a position for the start of a subsequent wiping cycle. This application represents a clearly unpractical solution to the problem addressed by the present application.

### SUMMARY OF THE INVENTION

Accordingly, the present invention has been made to provide an apparatus and method capable of eliminating these problems.

A first aspect of the present invention provides a wiper apparatus comprising a windshield wiping apparatus comprising:
a wiper blade (6) to effect wiping of the windshield;
a slide bar (4) with the wiper blade (6) attached thereon;
a housing (3) for supporting the slide bar (4) adapted to enable the slide bar (4) to move longitudinally;
a wiper motor (2) for unidirectionally rotating the housing (3);
and an actuating motor (7) for moving the slide bar (4) longitudinally while it is rotated by drive of the wiper motor, whereby;
the actuating motor (7) is adapted to position the slide bar (4) towards either end of its longitudinal travel as the wiper blade (6) is rotated from a wiping start position to a wiping end position (Apparatus of the type disclosed e.g. in EP-A-0 223 390) characterised in that the actuating motor is adapted to position the slide bar (4) towards its opposite end of longitudinal travel as the wiper blade (6) passes into a non-wiping rotation range such that the wiper blade (6) takes up the wiping start position for the start of a subsequent wipe of the windshield whereby two unidirectional wipes of the windshield are completed during each full rotation of the housing (3).

According to a further aspect of this invention:- A windshield wiping apparatus comprising a wiper arm having a wiper blade carried thereon whereby the wiper arm comprises a slide bar having a wiper blade extending substantially along its length, said bar being supported by said housing and being adapted to move relative to said axis between first and second positions under control of the actuating motor,
a wiper motor adapted to rotate said arm about an axis to move said blade arcuately over the windshield to be wiped;
a housing for supporting said wiper am and adapted for rotation therewith and
an actuating motor means for oscillating said wiper are;
control means for said actuating motor whereby over a first part of the rotation of the wiper motor, the slide bar is in the first end position and effects a pass of the wiper blade over the windshield so that the blade approaches an edge thereof
(Apparatus disclosed e.g. in EP-A-2 223 390) characterised by the combination of the following features:
a) the wiper motor is adapted to rotate the wiper arm continuously about its axis without reversing its direction of rotation,
b) as the blade approaches said edge thereof the actuating motor is adapted to move the slide bar to the second end position during a non-wiping range of rotation of the blade to re-present the wiper blade to the windshield to continue the wiping operation over the second part of the rotation of the wiper motor.

A wiper apparatus for a windshield of a vehicle according to an embodiment of either the first or the second aspect of the present invention comprises a drive control unit coupled to the rotation angle detection means and the displacement position detection means adapted to output a drive control command to each of the motors on the basis of detection signals received from said detection means; wherein the drive control unit has a displacement control means for controlling the blade moving motor so as to position the slide bar at either end of its travel and to wipe the windshield unidirectionally from the wiping start position to the wiping end position of a wiping rotation range and outputting the drive command to the blade moving motor to position the slide bar at the opposite end of its travel upon detection that the wiper blade has passed from the wiping rotation range to a non-wiping rotation range.

In accordance with a third aspect of the present invention, a method of wiping a windshield of a vehicle is provided, which comprises the steps of:
continuously rotating a drive for a wiper arm,
providing on said arm sliding means carrying a wiper blade adapted to wipe said windshield, and
controlling the position of the sliding means to move the wiper blade with respect to said drive so that the blade executes two wipes of the windshield for each rotation of said drive, and so that the rotation of the drives includes a non-wiping arc in which the sliding means causes or allows the wiper blade to be transported to a position substantially diametrically opposite its first position to the start of the next wiping cycle.

According to the construction as described above, the present invention makes possible wiping of the windshield without reversing the rotation of the wiper arm.

The invention will be described now by way of example only, with particular reference to the accompanying drawings. In the drawings:

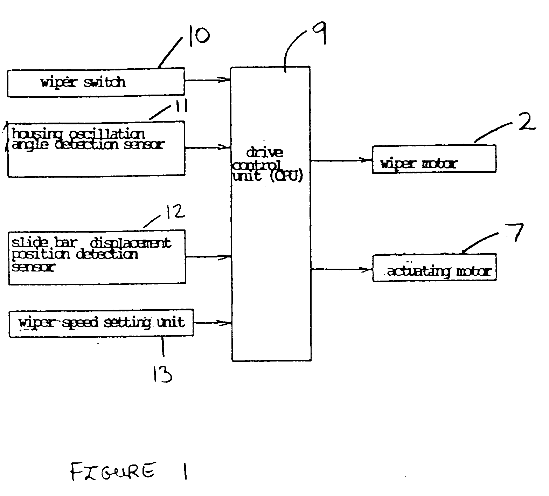

Fig.1 is a block diagram showing a drive control mechanism in accordance with the present invention;
Fig.2 is a flowchart showing the procedure for the drive control;
Fig.3 is an explanatory view showing the movement of the wiper apparatus in operation;
Fig.4 is an explanatory view showing the movement of a wiper apparatus in operation in another example;
Fig.5 is a perspective view of the above wiper apparatus;
Fig.6 is a perspective view of the same wiper apparatus showing the state where the slide bar is being moved;
Fig.7 is an exploded perspective view of the same wiper apparatus; and

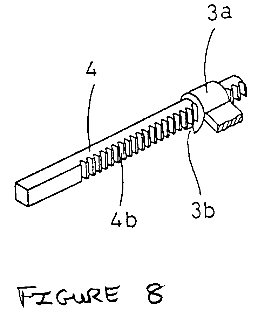

Fig.8 is perspective view of a slide bar according to another example.

### DESCRIPTION OF THE PREFERRED EMBODIMENTS

A specific embodiment of the present invention will now be described by way of the accompanying drawings. In the drawings, what is denoted by numeral 1 is a wiper apparatus embodying the present invention. An output shaft 2a of a wiper motor 2 (corresponding to "blade rotating motor" of the present invention) of the wiper apparatus 1 has a housing 3 integrally formed thereon so that the housing 3 is continually driven to be unidirectionally rotated by drive of the wiper motor 2.

On a pair of support arms 3a which are provided on the housing 3 with a predetermined separation, a slide bar 4 is supported so as to be movable in its axial direction rile rotation about the axis thereof is restricted. Known suitable methods such as a key-groove fitting method as shown in the embodiment, a spline fitting method or a method in which the slide bar itself is formed into the shape of a square column may naturally be employed as the means for restricting the rotation of the slide bar 4 about the axis thereof. An attaching pin 4a is caused to project at the longitudinal center portion of the slide bar 4 and the lengthwise longitudinal center portion of the wiper blade 6 is attached to the attaching pin 4a with a pressing spring 5 sandwiched therebetween. The wiper blade 6 is thus forced against the windshield surface by the pressing spring 5. It should be noted that each support arm 3a has a notch 3b to avoid interference with the movement of the attaching pin 4a.

What is denoted by numeral 7 is an actuating motor (corresponding to "blade moving motor" of the present invention) internally provided on the housing 3. An output gear (pinion gear) 8 integrally provided on the output shaft 7a of the actuating motor 7 meshes with a rack gear 4b which is formed on the slide bar 4. The slide bar 4 is thus moved lengthwise of the bar together with the wiper blade 6 by forward and reverse drive of the actuating motor 7 while it is rotated about the axis of the motor shaft 2a by drive of the wiper motor 2.

A description will now be given with respect to the procedure of drive control of the wiper motor 2 and the actuating motor 7. Specifically, these motors 2, 7 are constructed to be driven on the basis of control commands from a drive control unit (CPU) 9 which comprises a microcomputer. The drive control unit 9 receives signals from various switches, sensors and setting units including: a wiper switch 10; a rotation angle detection sensor 11 for detecting the rotation angle of the housing 3 (i.e., rotation angle of the wiper blade 6); a displacement position detection sensor 12 for detecting the longitudinal displacement of the slide bar 4 (i.e., displacement of the wiper blade 6); and a wiping speed setting unit 13. Necessary drive command signals are then provided to the motors 2, 7 on the basis of these input signals. In this connection, the rotation angle of the housing 3 is determined by the rotation of the motor output shaft 2a. The rotation angle detection sensor 11 may thus be achieved for example by a rotation angle detection sensor for the motor output shaft 2a. Further, while a stroke sensor for detecting a change in length may be used as the displacement position detection sensor 12 for detecting the longitudinal displacement of the slide bar 4, the actuating motor 7 in the present embodiment is constructed to have a built-in encoder so that the displacement of the slide bar 4 is detected by the detection result of the encoder. These detection means may be composed of any actual means as far as their respective objects may be detected.

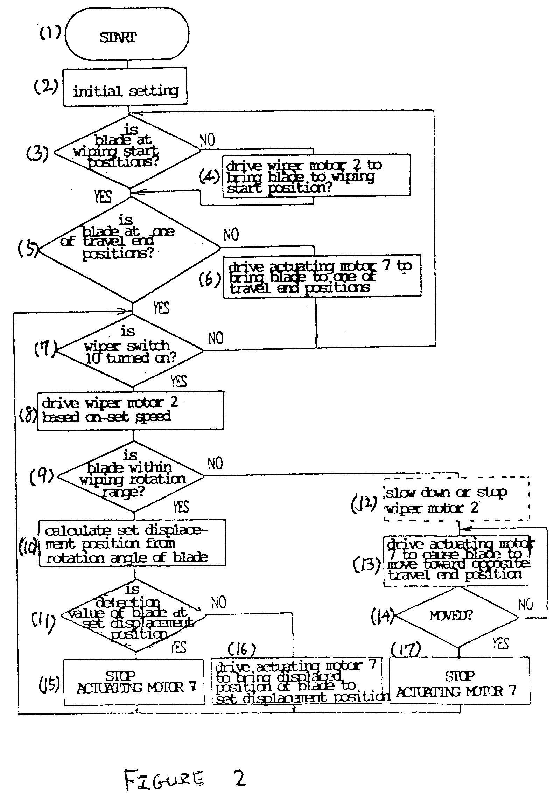

Fig.2 is a flowchart showing an exemplary procedure of the drive control of the motors 2, 7. For ease of description, the center of rotation of the housing 3, i.e., the position of the motor output shaft 2a in the present embodiment is set to the evict center of the two support arms 3a. Further, the position of the motor output shaft 2a is set to the lower portion at the center with respect to the left and right direction of the windshield to be wiped. Based on the construction as described, it is thus convenient that a complete cycle of a geometrically congruent wiping operation is performed at each 180-degree rotation of the motor output shaft 2a. For convenience in the present embodiment, the turning range of 0° ∼ 150° of the above described 180-degree rotation range is determined as a wiping operation range and the turning range of 150° ∼ 180° thereof is determined as the range over which wiping is not performed, i.e., non-wiping rotation range.

In the present embodiment, the system is started when an engine key switch (not shown) is turned ON, whereby an initial setting operation is performed. An investigation is then made on the basis of the detected values of the two sensors 11, 12 as to whether the wiper blade 6 is positioned at the wiping start position of the wiping rotation range and at the same time whether the slide bar is positioned at one of the travel end side positions. If a judgment is made that the wiper blade is not at the wiping start position and that the slide bar is not at one of the travel positions, the drive control of the motors 2, 7 operates to bring them to these positions. In this state, the system waits for turning ON of the wiper switch 10.

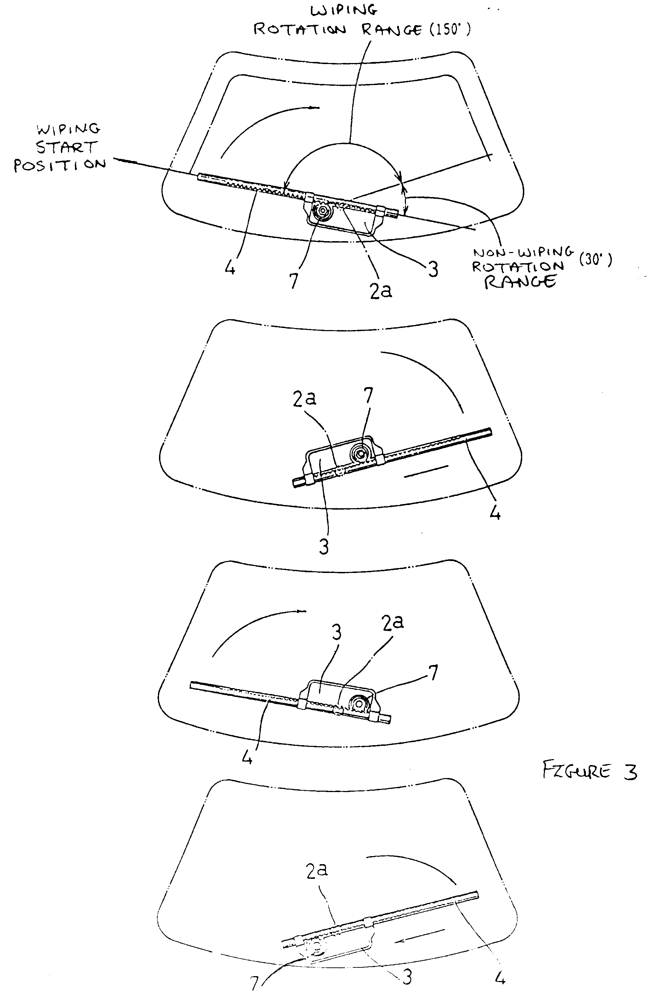

When the wiper switch 10 is turned ON in such a waiting state, a motor drive command set by the wiping speed setting unit 13 is provided from the drive control unit 9 to the wiper motor 2. The drive control unit 9 then investigates as to whether the rotation angle detection sensor 11 is within the wiping rotation range of 0° ∼ 150° and, if judged to be within the wiping rotation range, it furthermore calculates the displacement position of the wiper blade 6 based on the detected rotation angle of the rotation angle detection sensor 11. Such displacement position is calculated in the present embodiment in order to make the wiping region (locus) of the wiper blade 6 as large as possible. In other words, in order to make the wiping region (locus) of the wiper blade 6 a wider area, namely the widest wiping region (area), the locus of the end portion of the wiper blade 6 is, in the wiping process of the wiper blade 6 rotated by the wiper motor 2, set to move as adjacent as possible to the edge of the windshield instead of executing a simply circular arc about the motor output shaft 2a. Accordingly the displacement position of the wiper blade 6 by the actuating motor 7 is previously set to take the most preferable position (the position where the end portion of the wiper blade 6 is as adjacent as possible to the edge of the windshield, for example as shown in Fig. 3) corresponding to the rotating position (swinging position) of the wiper blade 6. The drive control unit 9 then makes a judgment as to whether or not the detected value of the displacement position detection sensor 12 coincides with the set displacement position and, if judged that there is no coincidence, it renders a forward and reverse drive control of the actuating motor 7 so that the wiper blade 6 is positioned to the set displacement position.

On the other hand, if it is judged that the wiper blade 6 has reached the non-wiping rotation range, the drive control unit 9 provides a drive control command to the actuating motor 7 so that the wiper blade 6 is moved to the travel end side position which is opposite to the travel end side at which the wiper blade 6 is currently positioned and, if it is judged then that it has been moved to the opposite travel end side position, driving of the actuating motor 7 is terminated. In this construction, drive of the wiper motor 2 as it is may be perform without causing any problem, if the movement of the wiper blade 6 toward the opposite travel end side by drive of the actuating motor 7 can be set so that it is quickly performed during the period through which the wiper blade 6 is rotated from the starting end to the completing end of the non-wiping rotation range i.e., when the wiper blade 6 is rotated through the non-wiping rotation range from 150° to 180° (0°). If, however, the wiper motor 2 is continually driven as it is where such movement is slower than the time period during which the wiper blade 6 is rotated through the non-wiping rotation range or where the non-wiping rotation range is very narrow, the wiper blade 6 may interfere with the windshield frame or it may be extended beyond the windshield surface. In such a case, the wiper motor 2 is controlled to be stopped or slowed down as required and the wiper blade 6 is moved toward the opposite travel end side position. Needless to say, it is then controlled to perform a wiping rotation of the next cycle.

In the state where the engine is running in the above embodiment of the present invention constructed as described, the wiper blade 6 is positioned at one of the travel end sides and waits for turning ON operation of the wiper switch 10. When the wiper switch 10 is operated to be turned ON in this state, the wiper motor 2 is driven to cause the housing 3 to rotate unidirectionally. In the course of such unidirectional rotation, the wiper blade 6 positioned at one of the travel end sides perform wiping of the windshield surface during the wiping rotation range, and, during the non-wiping rotation range, the actuating motor 7 is driven to cause the wiper blade 6 to move longitudinally to the opposite travel end side to prepare for the next cycle of wiping rotation.

As described, in the construction to which the present invention is applied, the wiper blade 6 for wiping the windshield surface, unlike that of the conventional construction, is not reversed and does not oscillate in a reciprocating manner. Wiping may be performed in the course of a unidirectional rotation of the housing 3 on which the wiper blade 6 is mounted. It thus does not receive the inertia at the time of reversing as an impact, and hence it is possible to perform a quiet and smooth wiping operation.

In addition, since, according to this construction, the wiper blade 6 is moved to the opposite travel end side position during the non-wiping rotation range, wiping of the windshield surface may be performed twice during one full turn of the housing 3, thereby it may be constructed to have a higher wiping ability. Moreover, since it is constructed such that the wiper blade 6 is moved toward the opposite travel end to complete one wiping process and to proceed to the next wiping process during a 180-degree rotation, there is no need to adopt an arrangement where the wiper motor 2 is positioned at the center of the window surface to obstruct the view through the window surface as is the case in a complete turn type (which is often provided on the window surface of a vessel) in which the wiper blade 6 is rotated through 360° about the motor shaft without any linear displacement. For example, it may be positioned below the windshield and may be used as one for a vehicle without any problem.

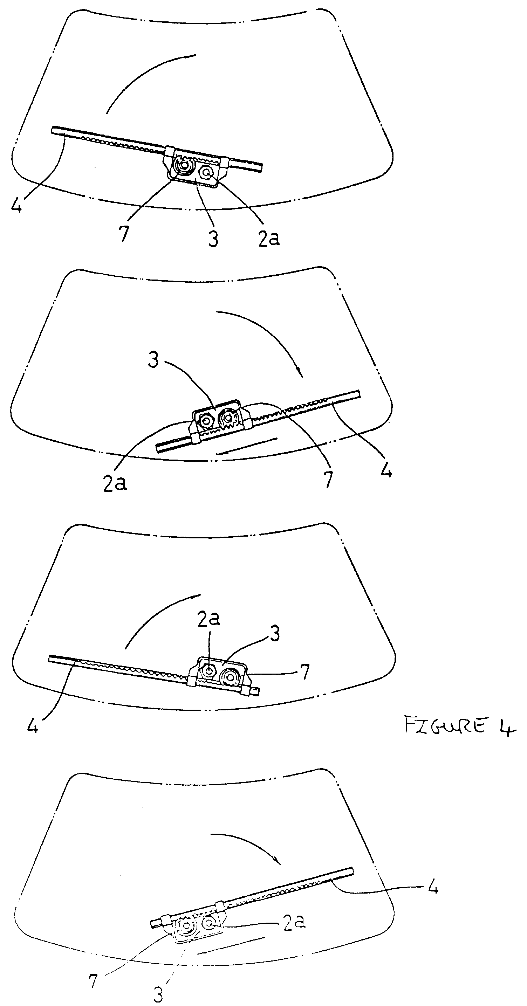

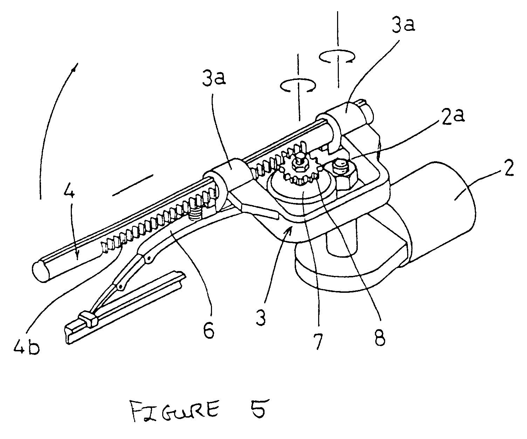

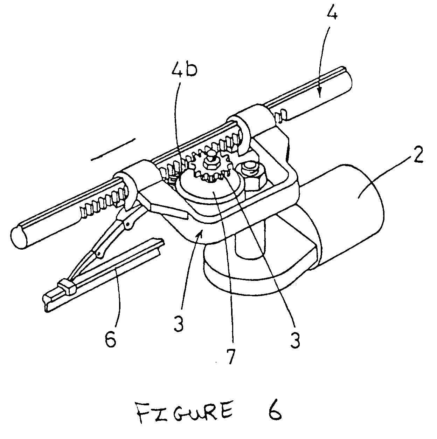

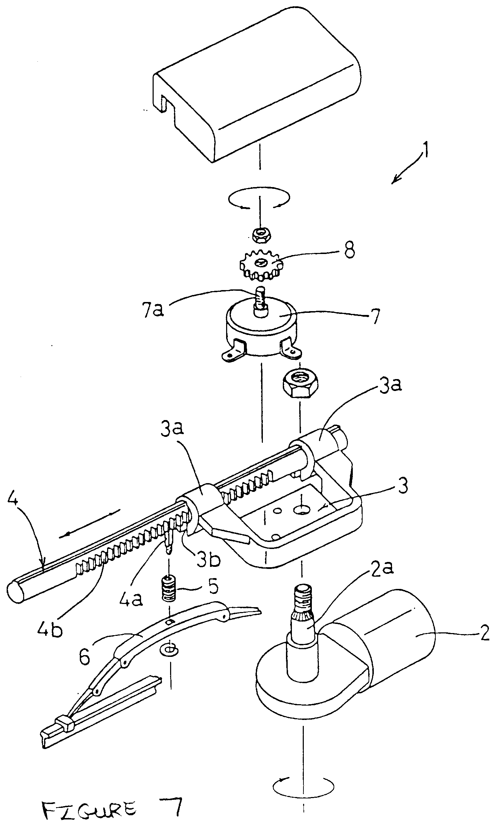

It should be noted that, naturally, the present invention is not limited to the embodiment as shown in the above described flowchart and, as shown in Figs.4 to 7, it may be embodied such that the position of motor output shaft 2a for rotation of the housing 3 by the wiper motor 2 is shifted from the center of the two support arms 3a. In such a construction, the position of the wiper blade is different between the case where the housing 3 is rotated from its 0- degree position and the case where it is rotated from its 180-degree position. Control as described of the above embodiment as it is causes a problem that the wiping rotation range by the wiper blade 6 is varied to be wider or narrower. To take measures against this, a construction may be employed such that a detection and judgment are made as to whether the current wiping rotation is of a rotation started from the 0-degree position or of a rotation started from the 180-degree position and the displacement position of the slide bar 4 is controlled to bring it to a position corresponding to each rotation.

In embodiments of the present invention constructed as has been described, the wiper blade is supported so as to be movable in its longitudinal direction on a housing which may be unidirectionally rotated based on drive of a blade rotating motor. In the course of such unidirectional rotation of the housing, the wiper blade positioned at one of travel end sides perform wiping of the windshield surface during a wiping rotation range rile, during a non-wiping rotation range, a blade moving motor is driven to cause the wiper blade to move toward the opposite travel end side so as to displace the wiper blade to its wiping position for the next cycle. As a result, unlike that of the conventional structure, the wiper blade is not reversed and does not oscillate in a reciprocating manner and wiping operation may be performed in the course of the unidirectional rotation of the housing on which the wiper blade is provided. Thus, unlike a blade which is reversed and oscillates in a reciprocating manner, it does not receive an impact at the time of reversing due to its inertia. Thus it is possible to perform a quiet and smooth wiping operation.

In addition, according to this construction, one wiping process is completed by a 180-degree rotation of the housing and the wiper blade is moved to the opposite travel end side position during the non-wiping rotation range thereof. Thus, wiping of a windshield surface may be performed twice during one full turn of the housing, whereby a high wiping ability may be achieved. Further, unlike a complete turn type in which the wiper blade is rotated 360 about the motor shaft without being linearly displaced, there is no need for adopting an arrangement where the motor is positioned at the center of the window surface obstructing the view through the window surface. For example, it may be positioned below the windshield and may be used as one for a vehicle without causing any problem.

## Claims

1. A windshield wiping apparatus comprising:
a wiper blade (6) to effect wiping of the windshield;
a slide bar (4) with the wiper blade (6) attached thereon;
a housing (3) for supporting the slide bar (4) adapted to enable the slide bar (4) to move longitudinally;
a wiper motor (2) for unidirectionally rotating the housing (3);
and an actuating motor (7) for moving the slide bar (4) longitudinally while the slide bar is rotated by drive of the wiper motor (2), whereby
the actuating motor (7) is adapted to position the slide bar (4) towards either end of its longitudinal travel as the wiper blade (6) is rotated from a wiping start position to a wiping end position characterised in that the actuating motor is adapted to position the slide bar (4) towards its opposite end of longitudinal travel as the wiper blade (6) passes into a non-wiping rotation range such that the wiper blade (6) takes up the wiping start position for the start of a subsequent wipe of the windshield whereby two unidirectional wipes of the windshield are completed during each full rotation of the housing (3).

2. Windshield wiping apparatus comprising a wiper arm having a wiper blade (6) carried thereon whereby the wiper arm comprises a slide bar (4) having a wiper blade (6) extending substantially along its length, said bar (4) being supported by said housing (3) and being adapted to move relative to said axis between first and second positions under control of the actuating motor (7);
a wiper motor (2) adapted to rotate said arm about an axis to move said blade (6) arcuately over the windshield to be wiped;
a housing (3) for supporting said wiper arm and adapted for rotation therewith and
an actuating motor means (7) for oscillating said wiper arm;
control means for said actuating motor (7) whereby over a first part of the rotation of the wiper motor (2), the slide bar (4) is in the first end position and effects a pass of the wiper blade (6) over the windshield so that the blade (6) approaches an edge thereof
characterised by the combination of;
a) the wiper motor (2) is adapted to rotate the wiper arm continuously about its axis (2a) without reversing its direction of rotation,
b) as the blade (6) approaches said edge thereof, the actuating motor (7) is adapted to move the slide bar to the second end position during a non-wiping range of rotation of the blade (6) to re-present the wiper blade to the windshield to continue the wiping operation over the second part of the rotation of the wiper motor (2).

3. A windscreen wiper apparatus according to either claim 1 or 2 comprising a rotation angle detection means (11) for detecting a wiping rotation angle of the wiper blade (6).

4. A windscreen wiper apparatus according to either claim 1 or 2 comprising a displacement position detection means (12) for detecting a longitudinal displacement position of the wiper blade (6).

5. A windscreen wiper apparatus according to either claim 1 or 2 comprising a drive control unit coupled to the rotation angle detection means (11) and the displacement position detection means (12) adapted to output a drive control command to each of the motors on the basis of detection signals received from said detection means; wherein the drive control unit (9) has a displacement control means for controlling the blade moving motor (7) so as to position the slide bar at either end of its travel and to wipe the windshield unidirectionally from the wiping start position to the wiping end position of a wiping rotation range and outputting the drive command to the blade moving motor (7) to position the slide bar (4) at the opposite end of its travel upon detection that the wiper blade (6) has passed from the wiping rotation range to a non-wiping rotation range.

6. A method of wiping a windshield of a vehicle which method comprises
continuously rotating a drive for a wiper arm,
providing on said arm sliding means carrying a wiper blade (6) adapted to wipe said windshield, and
controlling the position of said sliding means to move the wiper blade with respect to said drive so that the blade executes two wipes of the windshield for each rotation of said drive, and so that the rotation of the drives includes a non-wiping arc in which the sliding means causes or allows the wiper blade to be transported to a position substantially diametrically opposite its first position to the start of the next wiping cycle.

7. A method, as claimed in claim 6 characterised in that the rotation of the drive includes a non-wiping arc in which the sliding means causes or allows the wiper blade (6) to be transported to a position substantially diametrically opposite its first position to the start of the next wiping cycle.

## Patentansprüche

1. Wischvorrichtung für Windschutzscheiben mit:
einem Wischblatt (6) zum Bewirken des Wischens der Windschutzscheibe;
einer Schubstange (4) mit dem ihr zugeordneten Wischblatt (6);
einem Gehäuse (3) zur Lagerung der Schubstange (4), die dem Gehäuse (3) gegenüber in ihrer Längsrichtung verstellbar ist;
einem Wischermotor (2) zum Drehen des Gehäuses (3) stets in ein und derselben Drehrichtung;
und einem Stellmotor (7) zum Verschieben der Schubstange (4) in ihrer Längsrichtung, während diese durch den Antrieb durch den Wischermotor (2) wie das Gehäuse (3) gedreht wird, wobei
der Stellmotor (7) vorgesehen ist, um die Schubstange (4) gegen jeweils eines der Enden des longitudinalen Verstellweges der Schubstange (4) zu verstellen, während das Wischblatt (6) aus einer Wischstartposition heraus zu einer Wischendposition geschwenkt wird **dadurch gekennzeichnet, daß** der Stellmotor dazu bestimmt ist, die Schubstange (4) zum gegenüberliegenden Ende des longitudinalen Verstellweges hin zu verstellen, wenn das Wischblatt (6) in einem Bereich des Nichtwischens geschwenkt wird derart, daß das Wischblatt (6) die Wischstartposition für den Start zu einem nachfolgenden Wischen der Windschutzscheibe einnimmt, wobei ein zweimaliges Wischen der Windschutzscheibe in ein und derselben Schwenkrichtung des Wischblattes während einer vollen Umdrehung des Gehäuses (3) erfolgt.

2. Wischvorrichtung für Windschutzscheiben
mit einem Wischerarm mit einem ihm zugeordneten Wischblatt (6), wobei der Wischerarm eine Schubstange (4) mit einem Wischblatt (6) aufweist, das im wesentlichen in der Längsrichtung der Schubstange verläuft, wobei die genannte Schubstange (4) im Gehäuse (3) gelagert ist und dazu bestimmt ist, sich relativ zu der genannten Achse zwischen erster und zweiter Position unter der regelnden Einwirkung des Stellmotors (7) zu bewegen;
einem Wischermotor (2) zum Drehen des Wischerarmes um eine Achse, um das Wischblatt (6) bogenförmig über die zu wischende Windschutzscheibe zu bewegen;
einem Gehäuse (3) zum Lagern des genannten Wischerarmes und dazu bestimmt, mit dem Wischerarm gedreht zu werden und
einem Stellmotor (7) zum oszillierenden Bewegen des genannten Wischerarmes;
einem Regelmittel für den Stellmotor (7), wobei während eines ersten Teiles der Drehung des Wischermotors (2) sich die Schubstange (4) in der ersten Endposition befindet und die Bewegung des Wischblattes (6) über die Windschutzscheibe bewirkt, so daß sich das Wischblatt (6) einer Windschutzscheibenseite annähert,
**gekennzeichnet** durch die Kombination von
(a) der Wischermotor (2) ist dazu bestimmt, den Wischerarm kontinuierlich um seine Achse (2a) ohne Änderung der Drehrichtung zu drehen,
(b) während sich das Wischblatt (6) der genannten Windschutzscheibenseite annähert, ist der Stellmotor (7) dazu bestimmt, die Schubstange während der Bewegung des Wischblattes (6) in einem Nichtwischbereich in die zweite Endposition zu verstellen, um das Wischblatt in die Stellung zurückgestellt zu haben, aus der heraus das Wischen der Windschutzscheibe während eines zweiten Teiles des Drehens des Wischermotors (2) fortgesetzt werden kann.

3. Eine Windschutzscheibenwischvorrichtung gemäß dem der Ansprüche 1 oder 2 mit einem Drehwinkelfühlmittel (11) zum Ermitteln des Wischschwenkwinkels des Wischblattes (6).

4. Eine Windschutzscheibenwischvorrichtung gemäß jedem der Ansprüche 1 oder 2 mit Positionsveränderungsfühlmittel (12) zum Ermitteln einer Positionsveränderung des Wischblattes (6) in Längsrichtung.

5. Eine Windschutzscheibenwischvorrichtung gemäß jedem der Ansprüche 1 oder 2 mit einer Antriebsregelungseinheit in Verbindung mit dem Drehwinkelfühlmittel (11) und dem Positionsveränderungsfühlmittel (12) zum bestimmungsgemäßen Liefern eines Antriebssteuerungsbefehlssignales an jeden der Motoren auf der Basis der von den Fühlmitteln erhaltenen Fühlsignale; wobei die Antriebsregelungseinheit (9) ein Verstellungsregelungsmittel aufweist, um den Wischblattantriebsmotor (2) so zu regeln, daß die Schubstange an jedem Ende ihres Bewegungsbereiches positionierbar ist und daß die Windschutzscheibe in ein und derselben Richtung aus der Wischstartposition heraus zur Wischendposition des Wischrotationsbereiches gewischt wird und wobei ein Antriebsbefehlssignal an den Wischblattantriebsmotor (7) geliefert wird, die Schubstange (4) am gegenüberliegenden Ende ihres Verstellweges nach Feststellung, daß das Wischblatt (6) vom Wischschwenkbereich in einen Nichtwischschwenkbereich gewechselt hat, zu positionieren.

6. Ein Verfahren zum Wischen einer Windschutzscheibe eines Fahrzeugs, das einschließt
kontinuierliches Drehen eines Antriebes für einen Wischerarm,
Zuordnen eines verschiebbaren Mittels mit einem Wischblatt (6) zu dem Wischerarm, um die Windschutzscheibe wischen zu können und
Regelung der Position des verschiebbaren Mittels zum Bewegen des Wischblattes relativ zu dem Antrieb so, daß das Wischblatt zwei Wischbewegungen auf der Windschutzscheibe während jeder Position des Antriebes ausführt und so, daß die Rotation des Antriebes einen nichtwischenden Bewegungsbogen einschließt, bei dem das verschiebbare Mittel veranlaßt oder zuläßt, daß das Wischblatt in eine Position verstellt wird, die im wesentlichen diametral seiner ersten gegenüberliegt, um den nächstfolgenden Wischzyklus beginnen zu können.

7. Ein Verfahren wie in Anspruch 6 beansprucht, **dadurch gekennzeichnet, daß** die Schwenkung des Antriebes einen Nichtwischbogenabschnitt einschließt, bei dem das verschiebbare Mittel es dem Wischblatt (6) ermöglicht, in eine Postion verstellt zu werden, die im wesentlichen seiner ersten Position diametral gegenüberliegt, um den nächstfolgenden Wischzyklus beginnen zu können.

## Revendications

1. Un dispositif d'essuie-glace de pare-brise comprenant :
une raclette d'essuyage (6) pour effectuer l'essuyage du pare-brise ;
une barre coulissante (4) sur laquelle est fixée la raclette (6) ;
un logement (3) pour supporter la barre coulissante (4) appropriée pour permettre à la barre coulissante (4) de se déplacer longitudinalement ;
un moteur d'essuie-glace (2) pour une rotation unidirectionnelle du logement (3) ;
et un moteur d'actionnement (7) pour déplacer la barre coulissante (4) longitudinalement, pendant qu'elle est mise en rotation par l'entraînement du moteur d'essuie-glace (2), de sorte que
le moteur d'actionnement (7) est approprié pour positionner la barre coulissante (4) en direction des deux extrémités de son parcours longitudinal pendant que la raclette (6) est tournée depuis une position de départ d'essuyage vers une position de fin d'essuyage, caractérisé en ce que le moteur d'actionnement est adapté pour positionner la barre coulissante (4) en direction de son extrémité opposée du parcours longitudinal tandis que la raclette d'essuyage (6) passe à l'intérieur d'une plage de rotation de non-essuyage de sorte que la raclette (6) prend la position de départ d'essuyage pour le départ d'un essuyage ultérieur du pare-brise, de sorte que deux essuyages unidirectionnels du pare-brise sont effectués pendant chaque rotation complète du logement (3).

2. Dispositif d'essuie-glace de pare-brise, comprenant un bras d'essuie-glace portant une raclette (6), de sorte que le bras d'essuie-glace comprend une barre coulissante (4) présentant une raclette (6) s'étendant sensiblement le long de sa longueur, ladite barre (4) étant supportée par ledit logement (3) et étant appropriée pour se déplacer par rapport audit axe entre de première et seconde positions sous la commande du moteur d'actionnement (7).
un moteur d'essuie-glace (2) adapté pour faire tourner ledit bras autour d'un axe afin de déplacer ladite raclette (6) de manière arquée au-dessus du pare-brise à essuyer ;
un logement (3) pour supporter ledit bras d'essuie-glace et adapté pour tourner avec lui, et
des moyens à moteur d'actionnement (7) pour l'oscillation dudit bras d'essuie-glace ;
des moyens de commande pour ledit moteur d'actionnement (7), de sorte que pendant une première partie de la rotation du moteur d'essuie-glace (2), la barre coulissante (4) soit dans la première position d'extrémité et effectue un passage de la raclette (6) sur le pare-brise de sorte que la raclette (6) s'approche d'un bord,
caractérisé par la combinaison des caractéristiques suivantes :
a) le moteur d'essuie-glace (2) est adapté pour faire tourner le bras d'essuie-glace en continu autour de son axe (2a) sans inverser sa direction de rotation,
b) lorsque la raclette (6) s'approche dudit bord, le moteur d'actionnement (7) est adapté pour déplacer la barre coulissante en direction de la seconde position d'extrémité pendant une plage de rotation de non-essuyage de la raclette (6), présenter à nouveau la raclette au pare-brise afin de continuer l'opération d'essuyage sur la seconde partie de la rotation du moteur d'essuie-glace (2).

3. Un dispositif d'essuie-glace de pare-brise selon l'une des revendications 1 ou 2 comprenant un moyen de détection d'angle de rotation (11) pour la détection d'un angle de rotation d'essuyage de la raclette (6).

4. Un dispositif d'essuie-glace de pare-brise selon l'une des revendications 1 ou 2 comprenant un moyen de détection de position de déplacement (12) pour la détection d'une position de déplacement longitudinal de la raclette (6).

5. Un dispositif d'essuie-glace de pare-brise selon l'une des revendications 1 ou 2 comprenant une unité de commande d'entraînement couplée aux moyens de détection (11) de l'angle de rotation et aux moyens de détection de position de déplacement (12) adaptés à délivrer un ordre de commande d'entraînement à chacun des moteurs sur la base des signaux de détection reçus desdits moyens de détection ; dans lequel l'unité de commande d'entraînement (9) présente un moyen de commande de déplacement pour commander le moteur de déplacement (7) de la raclette de manière à positionner la barre coulissante aux deux extrémités de son parcours et pour essuyer le pare-brise unidirectionnellement depuis la position de début d'essuyage à la position de fin d'essuyage d'une plage de rotation d'essuyage et pour délivrer l'ordre d'entraînement au moteur d'entraînement (7) de la raclette afin de positionner la barre coulissante (4) à l'extrémité opposée de son parcours suite à la détection que la raclette (6) est passée de la plage de rotation d'essuyage à une plage de rotation de non-essuyage.

6. Un procédé d'essuyage d'un pare-brise de véhicule, procédé qui comprend
la rotation en continu d'un entraînement pour un bras d'essuie-glace,
la disposition sur ledit bras de moyens de coulissement, portant une raclette (6) adaptée pour essuyer ledit pare-brise, et
la commande de la position desdits moyens de coulissement pour déplacer la raclette par rapport audit entraînement de sorte que la raclette exécute deux essuyages du pare-brise pour chaque rotation dudit entraînement, et de sorte que la rotation des entraînements comprend un arc de non-essuyage dans lequel les moyens de coulissement amènent ou permettent à la raclette d'être transportée à une position opposée de manière sensiblement diamétrale à sa première position pour le départ du cycle d'essuyage suivant.

7. Un procédé comme revendiqué à la revendications 6, caractérisé en ce que la rotation de l'entraînement comprend un arc de non-essuyage dans lequel les moyens de coulissement provoquent ou permettent à la raclette (6) d'être transportée vers une position opposée de manière sensiblement diamétrale à sa première position au départ du cycle d'essuyage suivant.
